# EUROPÄISCHE PATENTSCHRIFT

(11) **EP 1 510 690 B1**
(45) Veröffentlichungstag und Bekanntmachung des Hinweises auf die Patenterteilung: **27.10.2010**
(21) Anmeldenummer: 04019334.4
(22) Anmeldetag: 14.08.2004
(51) Int. Cl.: H02K 7/10

(54) **Starter-Generator-Vorrichtung für Kraftfahrzeuge**
Starter-generator device for vehicles
Démarreur-alternateur pour un véhicule automobile

(30) Priorität: 28.08.2003 DE 10339572
(43) Veröffentlichungstag der Anmeldung: 02.03.2005
(73) Patentinhaber: AUDI AG, 85045 Ingolstadt (DE)
(72) Erfinder: Märkl, Johann, 85128 Nassenfels (DE)

(56) Entgegenhaltungen:
- DE-A- 10 143 289
- DE-C- 4 143 440

## Beschreibung

Die Erfindung betrifft eine Starter-Generator-Vorrichtung für Kraftfahrzeuge gemäß dem Oberbegriff des Patentanspruches 1.

Eine derartige Starter-Generator-Vorrichtung zeigt die EP 0 789 441 B1, bei der der Rotor in Baueinheit mit dem Schwungrad an die Kurbelwelle der Brennkraftmaschine angebaut ist und der durch eine Vielzahl von Einzelwicklungen gebildete, gehäusefeste Stator den Rotor umschließt. Die gesamte Vorrichtung erfordert relativ viel Bauraum insbesondere in radialer Erstreckung, was insbesondere bei Kraftfahrzeugen mit Frontantrieb oder Allradantrieb zu Problemen mit angrenzenden Getriebewellen des aus Brennkraftmaschine und Geschwindigkeits-Wechselgetriebe bestehendem Antriebsaggregates führen kann.

Ferner ist es aus der nicht gattungsgemäßen EP 1 220 761 B1 bekannt, eine quer zur Kurbelwellenachse verlaufende Abtriebswelle eines in das Geschwindigkeits-Wechselgetriebe integrierten Vorderachs-Differenziales baulich günstig anzuordnen, indem man den an die Kurbelwelle unmittelbar angebauten Torsionsdämpfer und die anschließende Lamellenkupplung baulich trennt und die Abtriebswelle dazwischen positioniert.

Zur besseren Nutzung des knappen Bauraums in einem Fahrzeug schlägt das Dokument DE10143289 die Verwendung eines Schaltgetriebes mit mehreren Gang-Zahnradsätzen als Geschwindigkeitswandler vor, mit denen die Welle der Brennkraftmaschine und die Welle des Elektromotors wahlweise auf die Abtriebswelle geschaltet werden können.

Im bestimmten Fällen, wie beim Magnetplatten-Antrieb des Dokuments DE4143440, kann eine Ausnehmung im Ständer des Elektromotor Platz für nötige Bauteile schaffen.

Aufgabe der Erfindung ist es, eine Starter-Generator-Vorrichtung der gattungsgemäßen Art vorzuschlagen, die bei baulich geringem Mehraufwand eine günstige Anordnung einer oder mehrerer Getriebewellen des Antriebsaggregates ermöglicht.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Erfindungsgemäß wird vorgeschlagen, dass zumindest eine Wicklung des Stators einen Freiraum für den Durchtritt zumindest einer quer und/oder längs zur Kurbelwelle verlaufenden Welle aufweist. Es kann somit bei entsprechender baulicher Auslegung des Stators zumindest eine Welle quasi durch den Stator bzw. dessen Hüllkurve hindurch verlegt werden, wodurch vorteilhaft zusätzliche konstruktive Freiheitsgrade zu einem baulich besonders kompakten Antriebsaggregat geschaffen sind.

Der Freiraum kann fertigungstechnisch besonders einfach durch eine radial äußere Einbuchtung in zumindest einer Wicklung des Stators gebildet sein.

Sofern der dadurch erzielbare Bauraum nicht ausreicht, kann alternativ der Freiraum durch zwei in Umfangsrichtung zueinander beabstandete Wicklungen hergestellt sein.

Zur Erzielung zumindest im wesentlichen symetrischer Magnetkräfte um den Rotor können zwei diametral gegenüber liegende Freiräume gebildet sein, wobei sich die entsprechend anzuordnende Welle nur durch den einen Freiraum erstreckt.

Die Welle kann die quer zur Kurbelwellenachse verlaufende Abtriebswelle eines in das Wechselgetriebe integrierten Vorderachs-Differenziales des Antriebsaggregates sein, die aufgrund des vorgeschlagenen Freiraumes radial näher an die Kurbelwellenachse verlegbar ist und somit u.a. die erforderliche Bodenfreiheit des Kraftfahrzeuges und eine geringe Baulänge des Antriebsaggregates sicherstellen kann.

Alternativ oder zusätzlich kann die Welle eine im wesentlichen parallel zur Kurbelwelle verlaufende und ein Vorderachs-Differenzial antreibende Abtriebswelle des Wechselgetriebes sein, wobei das Differenzial an der Unterseite der Brennkraftmaschine positioniert sein kann.

In besonders kompakter Auslegung kann die Welle mit etwa dem Spaltabstand zwischen dem Stator und dem Rotor entsprechendem Abstand zum Rotor verlaufen.

Schließlich kann zumindest ein Freiraum derart positioniert sein, dass durch ungleich verteilte Magnetkräfte im Spalt zwischen dem Rotor und dem Stator die Gewichtskraft des Stators zumindest teilweise kompensiert wird. Dies bewirkt eine gewisse Stabilisierung des Stators im Betrieb des Kraftfahrzeuges und trägt zu dessen Dauerfestigkeit unter Berücksichtigung der auftretenden Schwingungen im Antriebsstrang bei.

Mehrere Ausführungsbeispiele der Erfindung sind im folgenden mit weiteren Einzelheiten näher erläutert. Die schematische Zeichnung zeigt in:
**Fig. 1** eine Starter-Generator-Vorrichtung an einem nicht dargestellten Antriebsaggregat für Kraftfahrzeuge, mit einer Einbuchtung im Stator für den Durchtritt einer parallel zur Kurbelwellenachse der Brennkraftmaschine verlaufenden Welle;
**Fig. 2** eine weitere Starter-Generator-Vorrichtung gemäß Fig. 1, mit zwei zwischen Wicklungen des Stators gebildeten Freiräumen; und
**Fig. 3** eine alternative Starter-Generator-Vorrichtung mit zwischen Wicklungen des Stators angeordneten Freiräumen für den Durchtritt einer quer zur Kurbelwellenachse der Brennkraftmaschine verlaufenden Welle.

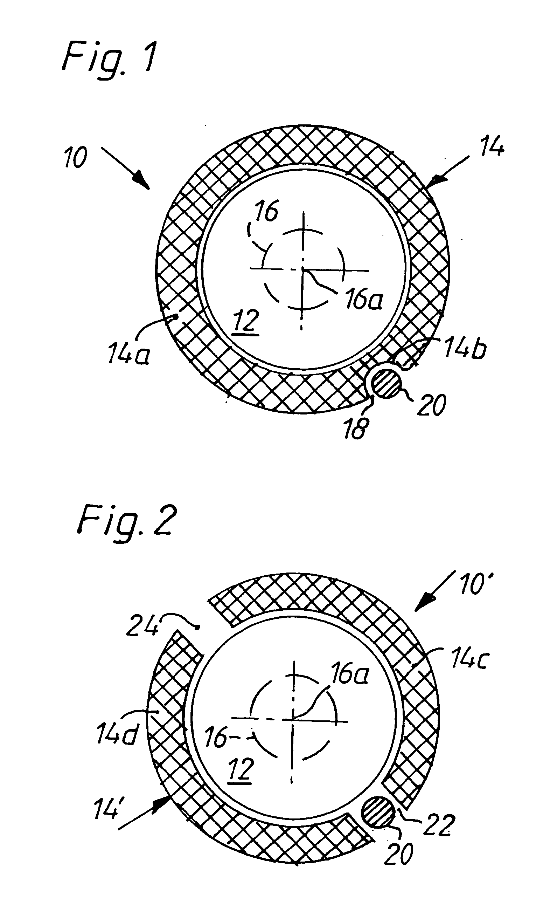

Die **Fig. 1** zeigt grob schematisch eine Starter-Generator-Vorrichtung 10, die sich im wesentlichen aus einem Rotor 12 und einem Stator 14 zusammensetzt.

Die Starter-Generator-Vorrichtung 10 ist in das aus Brennkraftmaschine, einem Geschwindigkeits-Wechselgetriebe und einem Vorderachs-Differenzial bestehende Antriebsaggregat (nicht dargestellt) eingebaut und dient entsprechend konstruktiv ausgelegt sowohl zum Starten der Brennkraftmaschine als auch zur Versorgung des Bordnetzes des Kraftfahrzeuges mit Strom. Soweit nicht beschrieben kann die Starter-Generator-Vorrichtung bekannter Bauart sein.

Die Starter-Generator-Vorrichtung 10 ist zwischen der Brennkraftmaschine an deren Kraftabgabeseite und einer Kupplungsglocke des Wechselgetriebes angeordnet. Dabei ist der Rotor 12 an der Kurbelwelle 16 befestigt und kann sich mit dieser um die Kurbelwellenachse 16a drehen. Der Rotor 12 kann in bekannter Weise mit einer Anfahrkupplung verbunden sein.

Um den Rotor 12 ist der ringförmige Stator 14 mit einer ringförmigen Wicklung 14a angeordnet, wobei der Stator 14 zum Rotor 12 in üblicher Weise einen ringförmigen Spalt (ohne Bezugszeichen) aufweist. Eine elektrische Wicklung setzt einen Abschnitt eines Statorpaketes voraus, so dass bei der Verwendung des Begriffs Wicklung jeweils auch der dazugehörige Abschnitt des Statorpaketes betroffen ist.

In der ringförmigen Wicklung 14a (es können auch mehrere einzelne und aneinander anschließende Wicklungen sein) ist, wie aus der Zeichnung **Fig. 1** ersichtlich, eine Einbuchtung 14b vorgesehen, die einen Freiraum 18 bildet.

In dem Freiraum 18 verläuft eine parallel zur Kurbelwellenachse 16a ausgerichtete Welle 20, die eine Abtriebswelle des nicht dargestellten Wechselgetriebes ist und die ein ebenfalls nicht dargestelltes Vorderachs-Differenzial des Kraftfahrzeuges antreibt. Aufgrund der Einbuchtung kann die Welle 20 wie ersichtlich näher an die Kurbelwellenachse 16a gelegt werden.

In der **Fig. 2** sind funktionell gleiche Teile mit gleichen Bezugszeichen versehen. Dabei ist bei gleicher Anordnung der Starter-Generator-Vorrichtung 10' der Stator 14' mit zwei etwa halbkreisförmigen Wicklungen 14c, 14d versehen, die zwischen sich in Umfangsrichtung gesehen Freiräume 22, 24 bilden. Die Freiräume 22, 24 liegen sich dabei diametral gegenüber und sind zur Erzielung symetrisch auf den Rotor 12 wirkender Magnetkräfte gleich groß ausgelegt. Anstelle zweier Wicklungen 14c, 14d können auch mehr Wicklungen vorgesehen sein.

In dem Freiraum 22 verläuft wiederum analog zur Fig.1 die Abtriebswelle bzw. Welle 20.

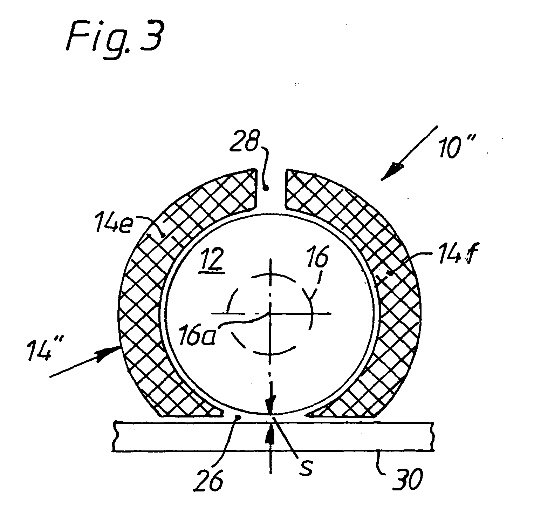

In der **Fig. 3** schließlich weist die Starter-Generator-Vorrichtung 10" einen Stator 14" auf, der ebenfalls mit zwei etwa halbkreisförmigen Wicklungen 14e, 14f ausgeführt ist. Zwischen den zueinander beabstandeten Wicklungen 14e, 14f sind Freiräume 26, 28 hergestellt.

Dabei ist der untere Freiraum 26 derart groß und kreissegmentartig ausgebildet, dass eine quer zur Kurbelwellenachse 16a verlaufende Welle 30 mit einem Abstand s zum Rotor 12 vorbeiführbar ist. Die Welle 30 ist eine Abtriebswelle des nicht dargestellten Vorderachs-Differenziales des besagten Antriebsaggregates zum Antrieb eines Vorderrades des Kraftfahrzeuges. Der Abstand s entspricht etwa dem ringförmigen Spaltmaß zwischen dem Rotor 12 und dem Stator 14".

Ferner ist der Freiraum 28 wie aus der Fig. 3 ersichtlich umfangsbezogen kleiner als der Freiraum 26 ausgeführt; daraus resultiert eine kompensierende Magnetkraft, die der Gewichtskraft des Stators 14" entgegenwirkt und diesen somit im Betriebzustand stabilisiert.

Zur Herbeiführung dieses Effektes kann jedoch auch ein zusätzlicher Freiraum vorgesehen sein. Ferner kann eine derartige Gewichtskraft kompensierende Auslegung durch eine entsprechende Beschaltung des Stators 14" (unterschiedliche Strombeaufschlagung bzw. Erregung der Wicklungen) durchgeführt sein, zumindest bei nicht leistungsrelevanten Betriebspunkten.

## Patentansprüche

1. Starter-Generator-Vorrichtung für Kraftfahrzeuge, die zwischen der Brennkraftmaschine und einem anschließenden Geschwindigkeits-Wechselgetriebe angeordnet ist, mit einem auf der Kraftabgabeseite der Kurbelwelle angeordnetem Rotor und einem gehäusefesten, den Rotor umschließenden Stator mit entsprechenden elektrischen Wicklungen, **dadurch gekennzeichnet, dass** zumindest eine Wicklung (14a; 14c, 14d; 14e, 14f) einen Freiraum (18; 22, 24; 26, 28) für den Durchtritt zumindest einer quer und/oder längs zur Kurbelwelle (16) verlaufenden Welle (20; 30) aufweist.

2. Vorrichtung nach Anspruch 1, **dadurch gekennzeichnet, dass** der Freiraum (18) durch eine radial äußere Einbuchtung (14b) in zumindest einer Wicklung (14a) gebildet ist.

3. Vorrichtung nach Anspruch 1, **dadurch gekennzeichnet, dass** der Freiraum (22, 24; 26, 28) durch zwei in Umfangsrichtung zueinander beabstandete Wicklungen (14c, 14d; 14e, 14f) hergestellt ist.

4. Vorrichtung nach einem oder mehreren der vorhergehenden Ansprüche, **dadurch gekennzeichnet, dass** zwei diametral gegenüber liegende Freiräume (22, 24; 26; 28) gebildet sind.

5. Vorrichtung nach einem oder mehreren der vorhergehenden Ansprüche, **dadurch gekennzeichnet, dass** die Welle (30) eine Abtriebswelle eines in das Wechselgetriebe integrierten Vorderachs-Differenziales ist.

6. Vorrichtung nach einem oder mehreren der vorhergehenden Ansprüche, **dadurch gekennzeichnet, dass** die Welle (18) eine parallel zur Kurbelwelle (16) verlaufende und ein Vorderachs-Differenzial antreibende Abtriebswelle des Wechselgetriebes ist.

7. Vorrichtung nach einem oder mehreren der vorhergehenden Ansprüche, **dadurch gekennzeichnet, dass** die Welle (30) mit etwa dem Spaltabstand s zwischen dem Stator (14) und dem Rotor (12) entsprechendem Abstand zum Rotor (12) verläuft.

8. Vorrichtung nach einem oder mehreren der vorhergehenden Ansprüche, **dadurch gekennzeichnet, dass** zumindest ein Freiraum (28) derart positioniert ist, dass durch ungleich verteilte Magnetkräfte im Spalt s zwischen dem Rotor (12) und dem Stator (14) die Gewichtskraft des Stators (14) zumindest teilweise kompensiert wird.

## Claims

1. Starter/generator apparatus for motor vehicles, which is arranged between the internal combustion engine and a connected variable-speed gearbox, having a rotor which is arranged on the force-output side of the crankshaft and a stator which is fixed to the housing, surrounds the rotor and has corresponding electrical windings, **characterized in that** at least one winding (14a; 14c, 14d; 14e, 14f) has a free space (18; 22, 24; 26, 28) for the passage of at least one shaft (20; 30) which runs transversely and/or longitudinally relative to the crankshaft (16).

2. Apparatus according to Claim 1, **characterized in that** the free space (18) is formed by a radially outer recess (14b) in at least one winding (14a).

3. Apparatus according to Claim 1, **characterized in that** the free space (22, 24; 26, 28) is produced by two windings (14c, 14d; 14e, 14f) which are spaced apart from one another in the circumferential direction.

4. Apparatus according to one or more of the preceding claims, **characterized in that** two diametrically opposite free spaces (22, 24; 26, 28) are formed.

5. Apparatus according to one or more of the preceding claims, **characterized in that** the shaft (30) is an output shaft of a front-axle differential which is integrated in the variable-speed gearbox.

6. Apparatus according to one or more of the preceding claims, **characterized in that** the shaft (18) is an output shaft of the variable-speed gearbox, this output shaft running parallel to the crankshaft (16) and driving a front-axle differential.

7. Apparatus according to one or more of the preceding claims, **characterized in that** the shaft (30) runs at a distance from the rotor (12), this distance corresponding approximately to the gap distance s between the stator (14) and the rotor (12).

8. Apparatus according to one or more of the preceding claims, **characterized in that** at least one free space (28) is positioned in such a way that the weight force of the stator (14) is at least partially compensated for by unequally distributed magnetic forces in the gap s between the rotor (12) and the stator (14).

## Revendications

1. Dispositif démarreur-alternateur pour véhicules automobiles, qui est disposé entre le moteur à combustion interne et une boîte de vitesses raccordée, comprenant un rotor disposé du côté de la sortie de force du vilebrequin et un stator entourant le rotor, fixé au boîtier, avec des enroulements électriques correspondants, **caractérisé en ce qu'**au moins un enroulement (14a ; 14c, 14d ; 14e, 14f) présente un espace libre (18 ; 22, 24 ; 26, 28) pour le passage d'au moins un arbre (20 ; 30) s'étendant transversalement et/ou longitudinalement par rapport au vilebrequin (16).

2. Dispositif selon la revendication 1, **caractérisé en ce que** l'espace libre (18) est formé par un renfoncement radialement extérieur (14b) dans au moins un enroulement (14a).

3. Dispositif selon la revendication 1, **caractérisé en ce que** l'espace libre (22, 24 ; 26, 28) est fabriqué par deux enroulements (14c, 14d ; 14e, 14f) espacés l'un par rapport à l'autre dans la direction périphérique.

4. Dispositif selon l'une quelconque ou plusieurs des revendications précédentes, **caractérisé en ce que** deux espaces libres (22, 24 ; 26 , 28) diamétralement opposés sont formés.

5. Dispositif selon l'une quelconque ou plusieurs des revendications précédentes, **caractérisé en ce que** l'arbre (30) est un arbre de sortie d'un différentiel d'essieu avant intégré dans la boîte de vitesses.

6. Dispositif selon l'une quelconque ou plusieurs des revendications précédentes, **caractérisé en ce que** l'arbre (18) est un arbre de sortie de la boîte de vitesses s'étendant parallèlement au vilebrequin (16) et entraînant un différentiel d'essieu avant.

7. Dispositif selon l'une quelconque ou plusieurs des revendications précédentes, **caractérisé en ce que** l'arbre (30) s'étend à une distance du rotor (12) correspondant approximativement à un interstice s entre le stator (14) et le rotor (12).

8. Dispositif selon l'une quelconque ou plusieurs des revendications précédentes, **caractérisé en ce qu'**au moins un espace libre (28) est positionné de telle sorte que la force de pesanteur du stator (14) soit au moins en partie compensée par des forces magnétiques réparties de manière non uniforme dans l'interstice s entre le rotor (12) et le stator (14).
